# EUROPEAN PATENT SPECIFICATION

(11) **EP 0 535 733 B1**
(45) Date of publication and mention of the grant of the patent: **02.12.1998**
(21) Application number: 92202938.4
(22) Date of filing: 24.09.1992
(51) Int. Cl.: G11B 27/34, G11B 33/10

(54) **Medium player with time-wise bar display of items**
Mediumabspieler mit zeitbedingter Stabwiedergabe von Dateneinheiten
Lecteur de supports d'enregistrement à affichage temporel en barres d'éléments d'information

(30) Priority: 02.10.1991 EP 91202565
(43) Date of publication of application: 07.04.1993
(73) Proprietor: Koninklijke Philips Electronics N.V., 5621 BA Eindhoven (NL)
(72) Inventor: Eggen, Josephus Hubertus, NL-5656 AA Eindhoven (NL); Westerink, Joanne Henriette Désirée Monique, NL-5656 AA Eindhoven (NL); Haakma, Reinder, NL-5656 AA Eindhoven (NL)
(74) Representative: Peters, Rudolf Johannes

(56) References cited:
- EP-A- 0 306 909
- PATENT ABSTRACTS OF JAPAN vol. 8, no. 65 (P-263) 27 March 1984 & JP-A-58 212 686 (MATSUSHITA DENKI SANGYO K.K.) 10 December 1983
- PATENT ABSTRACTS OF JAPAN vol. 8, no. 65 (P-263) 27 March 1984 & JP-A-58 212 689 (MATSUSHITA DENKI SANGYO K.K.) 10 December 1983
- PATENT ABSTRACTS OF JAPAN vol. 8, no. 65 (P-263) 27 March 1984 & JP-A-58 212 690 (MATSUSHITA DENKI SANGYO K.K.) 10 December 1983
- PATENT ABSTRACTS OF JAPAN vol. 8, no. 65 (P-263) 27 March 1984 & JP-A-58 212 691 (MATSUSHITA DENKI SANGYO K.K.) 10 December 1983
- IBM TECHNICAL DISCLOSURE BULLETIN., vol.30, no.10, March 1988, NEW YORK US pages 351 - 353 ANONYMOUS 'Three-level Audio Object Display for a Personal Computer Audio Editor'
- PATENT ABSTRACTS OF JAPAN vol. 6, no. 258 (P-163) (1136) 17 December 1982 & JP-A-57 152 578 (MATSUSHITA DENKI SANGYO K.K.) 20 September 1982

## Description

### FIELD OF THE INVENTION

The invention relates to a consumer apparatus for reading an information carrier having a linear sequence of information items and for reproducing the sequence of the information items, the apparatus comprising a first visual display means for displaying a bar comprising the start positions of the information items and for indicating respective states concerning the reproduction along the sequence of the information item so displayed.

A visual display of the activity levels of the medium information has been disclosed in EP-A-306 909 and referral therein to EP-A-275 199. The temporal granularity of the display is about ½ minute in the younger reference as compared with 5 minutes in the older reference. The latter reference has three levels of display, one indicating the intended recording time, a second one indicating time not used, a third one that an attempt is being made to record on an unavailable position. The present invention realizes that the non-expert user would benefit from a display on the basis of the organization of the recorded information viz à viz the user, in addition to the shown of timing positions only.

Japanese Abstract JP 58212690 discloses an apparatus for the reproduction of a linear sequence of information items on a carrier. This known apparatus shows the available items on the carrier by displaying the start positions of the individual information items next to a time scale. Furthermore. the known apparatus displays the total played back time from the beginning of the sequence until the present moment as a discretised bar along the time scale.

### SUMMARY TO THE INVENTION

Accordingly, amongst other things, it is an object of the present invention to assist the user by displaying such temporal organization, which according to a first aspect, is realized in that the first visual display means are arranged:
- to display various ones of the information items as a sub-bar each having a particular minimum length but otherwise a length that is proportional to a length of the particular information item, and
- to display a space between particular ones of the displayed information items, the space representing a gap between the particular information items in the linear sequence.
An identifiable information items is one that is in some way separate from others, such as by having a name, or other properties that would set it apart as a record. In music, this could be songs, pieces, etcetera. The identification can be attached to the item itself, or it may be stored separately, such as in a table of content (TOC), that would know the lengths of the various items, and possibly, other data thereon, such as name, composer, performer, or other. This discrete display of the items would give additional information to a user, such as realizable by counting of the items, or by recognizing an item through its length, or associating a particular item with another recognizable item. Preferably, the bars referring to the respective items constitute a strip-wise display. The bars may be separated by nominal dark spaces if successive items directly follow each other, or by larger dark spaces where a substantial medium interval is empty or not used. Other representations could be side markers at the item boundaries, or bars that have their length-proportion extending perpendicular to the sequence coordinate. Such a display could thus look somewhat as a histogram. In particular, the display is inexpensive, takes little space, and has been found to be a perceptively advantageous tool for the user.

Now, the invention has been conceived for a consumer tape recorder wherein digitized sound has been prerecorded in combination with digital table-of-content (TOC) information that is distributively stored, so that a relatively small fraction of tape length contains all TOC information. Another way of TOC storage could be on a separately accessible medium on the cartridge (optical or as an integrated circuit). In case of user-recorded tape, the player itself could know the table of contents in its on-board memory. The consumer aspect of the apparatus in particular refers to the category of rather inexperienced users, more so, than to the performance level of the apparatus itself. Now, in the referred tape recorder, the items are called tracks that have a variable length. Minimum length is determined by the recording format that contains a frame-based modulation and error correction organization. Anyway, the minimum length is much larger than one audio sample. Also, other applications would be useful, such as
- compact disc read-only, wherein TOC data may be present in a single track and access delay thereto would be negligible;
- recordable and/or erasable media if some higher-level provision is taken for updating the table of contents upon modification of actually stored information; in particular, compact disc is considered a prospective target;
- video recording/video storage, for which in principle similar arguments would apply as regards to audio;
- non-consumer recording such as for clinical, forensic, economical and agogical applications. The term consumer indicates that intended user knowhow would only need to be minimal.

Generally, the term -linear- indicates that there exists a -natural- sequence among the stored information, which sequence is followed in a default situation. Random accessibility to some degree may be overlayed thereon.

In principal, there may be four different user access functions to such recorder:
a) play, wherein the information recorded is reproduced in course with linear time and as available or accessible to the listener/viewer in question;
b) program, wherein such availability or accessibility may be altered, for example by:
   - suppressing particular items, titles or tracks;
   - protecting particular items, such as by password;
   - prescribing start/end, repeat, etcetera of items;
   - prescribing particular play sequences (track program);
c) record, wherein new information is stored on the medium as selectable according to prescribed critera, such as by an overwrite permission defined according to a particular beginning point and/or end point defined with respect to the respective track boundaries and/or time interval lengths relative to track beginning or end. Also, particular information may be tagged on an item by selecting on the latter's name or other indicatory information thereof;
d) edit, wherein an item may be renamed, erased or removed, moved to another physical position, be split, wherein two contiguous items may be organizationally connected, or wherein other higher-level function may be executed.

Advantageously, said display means allow for displaying discriminatory information between at least a first user functionality state and a second user functionality state on the level of a complete information item. Such functionality could be accessibility versus non-accessibility, present versus removed, text versus music, past versus future, etcetera. Especially in the latter case the discrimination can be written as a single information item. In most cases, the discrimination is on the level of a complete information item.

Advantageously, said display means allow for perceptually steady displaying discriminatory information regarding said item's user functionality state. The steady display is perceptually advantageous in respect to the blinking of the reference citation. Perceptually steady means that such changes as may occur are not seen, such as powering intermittently at a flicker-free frequency.

Advantageously, an actual pick-up position along said medium controls a change-over between a "past" state and a "future" state displayed by said display means. This clearly shows where the apparatus is playing, recording, etcetera. Alternatively it can be an intended cursor position, thereby showing the imminent termination point of a transient state. A further advantageous feature is wherein display means allow for discriminatorily displaying at a notional and functionality assisting pick-up element's position an associated said information item as differing from neighbouring ones of said information items. Especially in editing mode, it is advantageous to more specifically direct the user's attention on a particular information item that is the object of such editing, such as, for example, renaming or removing. Actually moving the pick-up element often is not necessary.

Advantageously, said display means allow for supplementing said length-proportional display alongside and temporally conforming to a second length-proportional display indicating an intended recording functionality. The simultaneous display of two bar-type displays for a present situation versus a situation after recording will assist the user in determining a sensible policy.

Preferably, any said display is monochromic. It has been found that any of white, green or blue in various levels of brightness and/or saturation would give a quiet representation. Alternatively, various colours could be combined, for example to signal an exception or forbidden situation in a different colour, such as red or yellow. Alternatively blinking could be introduced for the latter case.

According to a particularly advantageous aspect, said apparatus has second display means for in each of a plurality of apparatus modes displaying a plurality of function assisting indications in the way of a form showing messages as being cocontrolled with said first display means with respect to respective item functionality states and/or positions along said medium. Whereas the first display is particularly instructive as regards time-sequential aspects of the apparatus, the second display may indicate what is effectively to be done or being done. The function assisting indications are controlled to be selectively adjusted by the user as will be described hereinafter. The form-category of display is specifically distinct from the menu display which allows to see in parallel all possibilities to be selected presently, while the choice offered earlier in a menued tree is largely obscured. Also, the present display does not relate to indicator lamps and other signalizations that just show the presently executed function instead of specifying functionality of selectable future operation.

Further advantageous aspects are recited in dependent Claims.

### BRIEF DESCRIPTION OF THE FIGURES

The invention will be explained more in detail with respect to a preferred but non-limitative embodiment, and in particular with respect to appended Figures. Therein,
Figure 1 is an exemplary front plate layout;
Figure 2 is a block diagram of the apparatus;
Figure 3 is an INFORMATION layout;
Figures 4, 5, 6 are PROGRAM layouts;
Figure 7 is a RECORD layout;
Figures 8-12 are EDIT layouts.

### DESCRIPTION OF A PREFERRED EMBODIMENT

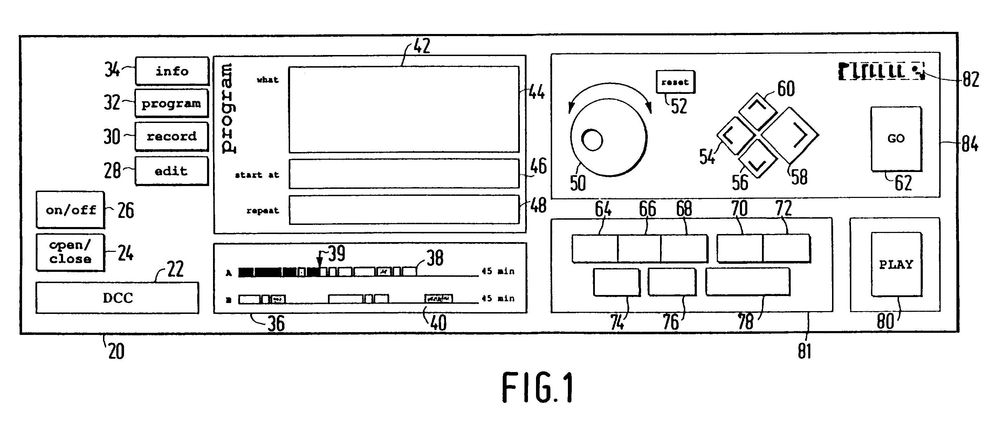

Figure 1 is a front plate 20 layout, shown in program mode layout, of a digital cassette audio tape recorder. Block 22 is the lid of the tape tray, button 24 controls open/close of this lid with automatic ejection, button 26 controls on/off of the whole apparatus. Button 28 starts edit mode. Button 30 starts record mode. Button 32 starts program mode. Button 34 starts information mode. Block 36 has the two length-proportional bar displays that allow for each of a set of identifiable discrete information items of at least a particular minimum length a steady indication of either a disactivated condition (here grey), a past condition (black/dark grey) or a future condition (white). Any other combination of grey levels, colours, hatchings, blinking, etcetera, would be feasible as well. In the example, the minimum physical length of a block would correspond to about ½ minute of tape, but this is due to the pixeled granularity of the display. If it is necessary to indicate still shorter items, various solutions would offer themselves in the environment of the invention. First, a single short item wedged between two relatively long ones could be -artificially- lengthened somewhat to the detriment of one or both of its longer neighbours. Second, a separate indication, such as another colour or greyness level could indicate -one or more very short items-. Third, such very short item could be suppressed. Various other solutions would be feasible as well. The display can be scaled up or down for various reasons. First, it could be automatically. Depending on the playing time of the medium, the scale can be always adjusted in such a way that actual display would substantially fill all of the available space in block 36. In another realization (not shown) the scaling would be manually controlled, possibly in such a way that the cursor would remain in the centre of the display. Especially in this situation, items that were long enough could have some simple identifier displayed within, such as a sequence number corresponding to the numbering that will be described hereinafter. The effective display of the short items, supra, could then be automatically updated in line with effective scale. Now, the displays for side A and side B are separate as shown. Physically the tape has two separate recordings side by side, both of 45 minutes length. Side B has empty spaces, which differs from a deactivated (- light grey) condition, in that usually, deactivation can be reversed by different programming. Each block is called a track. Blocks have unlimited maximum length as far as physically possible. Solid arrow 39 indicates actual position of pick-up element/recording head. Inasmuch as the two sides of the tape are physically alongside, switchover of the pick-up element between the two sides can be done quasi-instantaneously. Physically, the display can be liquid crystal, LED, CRT, electrochromic, or other. Block 42 shows proposed control actions in program mode that will be detailed hereinafter, and contains subblocks 44, 46, 48. The various display elements in block 42 may be in the same technology as block 36 or not. Block 84 houses various special controls. Rotary button or joggle 50 for an activated block (44, 46, 48) cycles all associated proposals through the display format. It has reset button 52 to a default state. Buttons 54, 56, 58, 60 are a four-way cursor mover. Button 56 moves downward, button 58 to the right, button 60 upward, button 54 to the left. They select the active proposal in block 42, in a way that will be described in detail hereinafter. Button 58 is one size bigger. Another solution is having it the same size as, but a different colour from the other three. Cursor 39 is not moved, because this represents actual physical position of the pick-up element. Button 62 activates leaving the control protocol for action. Word 82 is a manufacturer's trademark. The other buttons are conventional control buttons for an audio tape recorder and will not be discussed for brevity. Although not extensively disclosed herein, the invention would be just as feasible with remote control, speech-controlled apparatus, or other user-activity signalization.

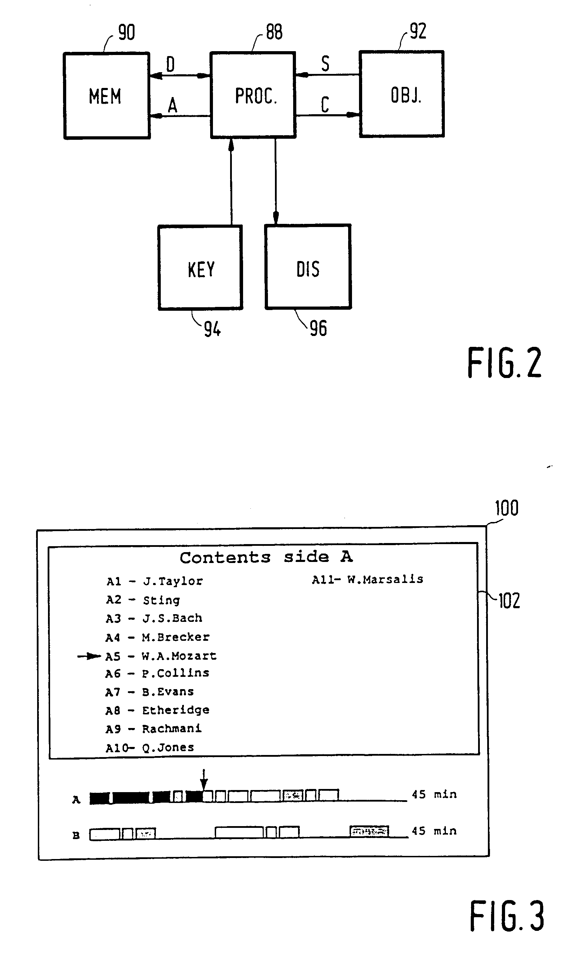

Figure 2 is a block diagram of an apparatus according to the invention. The apparatus' object (disc, tape or other) 92 gets control signals C and produces sensor signals S. Latter may be data from TOC and/or other identifiers, and also the signals that a user could intend to utilize and which in principle would be digital as well. However, there is no à priori bar against analog signals. Furthermore, signals S could be physical sensor data such as object (disc, tape or other) present/absent, spin up/spin down, forward/reverse, correct/unallowable command, and various others. Block 94 is a set of user activatable keys. Block 96 is a user display that displays part of Figure 1. Keys and display may be joined in the way of a soft keyboard. The keys and display have been treated supra. Block 90 represents a memory. For one, it operates as actual memory, for example, in that it stores the table of contents (TOC) of the object as soon as possible upon presentation of the object to the apparatus in question, so that the table of contents could be read therefrom. This reading can be activated automatically if this table of content is stored at default location (first revolution track of a compact disc) or is distributively readable, so that only a small stretch of the (tape) medium need to pass the pick-up element. In another organization, a specific command could be necessary for reading the table of contents. Furthermore, the memory may store more or less permanently general purpose information or such information that had been presented by the user person. After the relevant information had been stored, or for non-object related information, already from the beginning, such information can be addressed by signals A, and thereupon be provided as data D to processor 88. Processor 88 interfaces to all other subsystems mentioned. By itself, the processor functions are straightforward, only the interaction with display/keyboard lending any specific performance thereto. Timing, flowcharting, and policy would be clear from the descriptions of the various display formats hereinafter.

### THE DISPLAY FORMATS

Hereinafter, a set of display formats is discussed, that are organized according to four different families. Each respective family is activated by its own selection button 28-34 in Figure 1. In addition, the PLAY button 80 controls standard play modes. In addition to the discussion of the display, also the activation within each family with respect to buttons 50-62 will be discussed. Generally, the display pages according to the invention do not show a menu, from which a future choice may be made, because this has been found confusing for an unskilled user. In contradistinction, as far as executable operations concerns, the display formats for any partial function show a formalized proposal. Any such proposal can be fixed as it is shown. Such fixation for the aggregate of actual proposals shown is activated by fixating button 62. The above means that effectively the display shows a wholly or partially filled in form, showing all entries that have been made in the past (actually or by default) and also, where an entry may be modified: the highlighting can be an increased luminosity of the block edge or of its text, blinking, a specific indication such as an index finger, coloured asterisk, and other.

Now, Figure 3 is an INFORMATION layout. It shows contents of side A as read from TOC, and moreover, actual pick-up element position, both on the time bar display and on the list of contents, each time in the form of a black arrow. In contradistinction to the earlier convention, black is past, white is future, grey is deactivated, "no block" shown means empty or erased. The time length-proportional display also shows normal playing time of each side. Block 100 is the display perimeter, block 102 is the specific display of this format. Pressing reset button 52 will show the display of side A. Rotating rotary button 50 of Figure 1 will present other displays. One position clockwise rotated will show the same content display for side B. One further position clockwise rotated will show actual track as selected by the position of the pick-up element, to wit: number and label or name, length of actual track and time instant within the playing interval of actual track. One further position clockwise rotated will show actual track as selected by actual position of cursor element, to wit: number and label, and furthermore a part of the song lyrics in the neighbourhood of the pick-up element's position. In practice, this are the lyrics of the next 30 seconds or so interval. Note that activating the Info button 34 does not interfere with the playing operation of the tape recorder. During INFORMATION display, buttons 54-62 are deactivated.

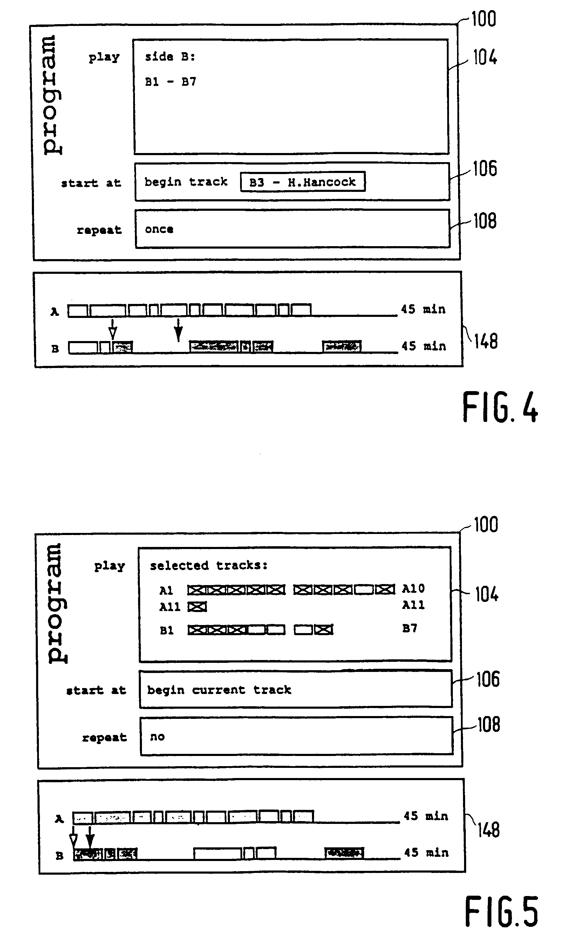

Figures 4, 5 are PROGRAM layouts that are activatable by button PLAY, or generally, by any button in block 81, because actuation of such button could influence the actual reproduction operation. In certain circumstances, in RECORD situation, for reasons of safety some more specific operation is necessary, to reach a play situation, which, however is a standard feature of players that have a recording capability, and, moreover, it is not related per se to the present invention. PROGRAM has three subblocks 104-108. Pressing "PROGRAM" 32 will always highlight the first block 104, highlighting per se not being shown in the Figure. Pressing cursor button 56 will step highlighting to the next lower block, until block 108 is reached. Pressing cursor button 60 will step highlighting to the next higher block, until block 104 is reached. Alternatively, the blocks could form a cyclical chain.

Now pressing reset 52 produces the default content for the highlighted block. Rotating rotary button 50 cycles the content displayed along a sequence of items predetermined for the highlighted block. For block 104, these items are for example:
Default: first side A, then side B
other proposals: first side B, then side A
only side A
only side B (this one shown)

Pressing cursor button 58 will actuate the next lower level for the highlighted block, if existing. The operation of cursor buttons 56, 60 only depends on what is actually displayed, irrespective of what level is actually displayed in the relevant block. The transition to the next lower level is only relevant if cursoring within the actually highlighted block is impossible. In the same way, pressing cursor buttons 54, 56, 58 will activate the next higher level for the highlighted block if cursoring within the highlighted block is impossible. Change-of-level within a particular block does not influence what is displayed in any other block.

With respect to the PROGRAM mode, Figure 4 shows the highest level for blocks 104, 108. Figure 5 shows the highest level for blocks 106, 108. The next lower level has been shown for block 104 in Figure 5. This displays all separate tracks of the originating display (= first side A, then side B) as respective blocks of standard size. Therefore, this distinguishes from the length-proportional bar display. Moreover, the display distinguishes between tracks that have been selected for playing -shown with a cross-, and non-selected tracks. If the originating block had been block 104 as shown in Figure 4, the next lower level would have featured only tracks B1 through B7. Within Figure 5 one track is highlighted. Upon entering, this is always the first track of those shown, irrespective of whether it had been selected or not. By means of cursor buttons 54, 58, the highlighting can be driven through each row of tracks as shown. By means of cursor buttons 56, 60 the highlighting can be stepped to the next row. If no track is present in the corresponding position, the system chooses the closest track in that row. The originating position may be remembered, or not. So, changing from A5 to the next lower row highlights A11. One further row may either highlight B1 or B5. Changing the selection for any highlighted track is done by operating button 50.

With respect to block 106, Figure 4 shows not the highest, but the second level. Now, there is one smaller block that is highlighted, showing that the play must start at that track which is displayed. Cycling through the tracks is done by rotary button 50, because the highlighting (the subblock within block 106) remains the same. Cycling is through all tracks displayed in block 104, whether according to the showing in Figure 4, or to the corresponding showing in Figure 5. Returning to the next higher level is effected by actuating cursor button 54 upon reaching the first displayable track, in this example B1.

In the PROGRAM mode, blocks 104, 106 have two levels, block 108 has only one level. Of course, the number of levels could be different, according to needs and intended user interest.

On the highest level, rotary button 50 may cycle the contents through the various blocks, for example, as follows:
block 106: default is begin side A
next: begin side B
begin current side
begin current track
at current position
begin specified track (= shown in Figure 4)
block 108: default is: no
cycling: once
twice
continually.

In another realization, the length-proportional display had been suppressed only for the program mode, in favour of another formalized proposal that would specify the pause between successive tracks. Default value would have been zero, whereas the various possibilities could be geometrically (1, 2, 4, 8, ...) or linearly (1, 2, 3, 4, ...) increasing. If during play, moving along unselected tracks would take longer than the specified pause, the actually attainable value would be taken.

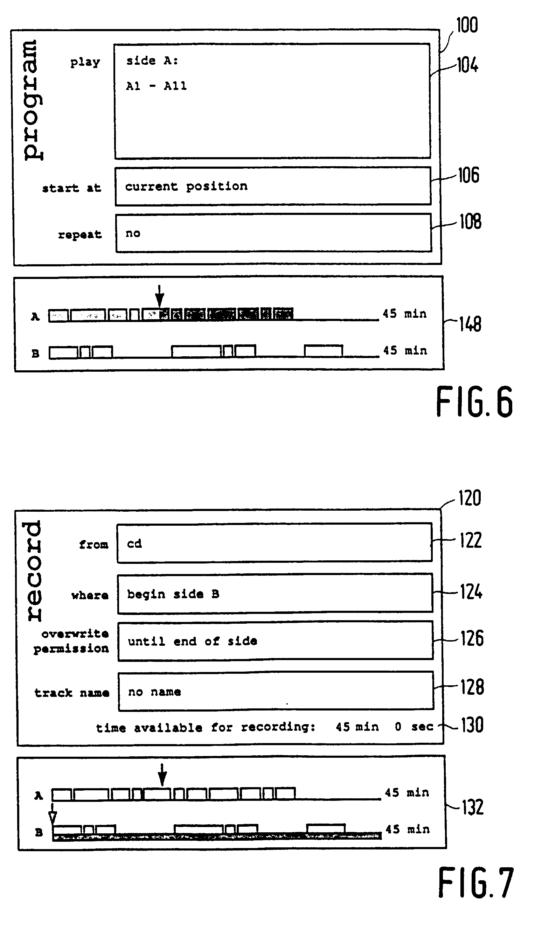

Figure 6 is a further PROGRAM layout. In the length-proportional linear bar display 148 for both sides the tracks sequence show activity levels and current position of pick-up head. In the Figure, the bar has been shown inside separate block 148. Of course, the configuration of this block as such, is a question of discretion. With respect to Figures 1, 3, the colour assignment is different: now, light grey is past, dark grey is future, white is non-selected. In addition to actual pick-up element position shown by a dark cursor arrow, there is a lighter grey cursor arrow actually showing the intended beginning of play. Upon actuating the -GO- button 62, the pick-up element will move to the intended start position, and in so doing, the "present" cursor is moved to the intended cursor position. Upon arrival there, the two will merge. In principle, more than two cursors could be feasible, the third one, for example, indicating the end of intended play.

Figure 7 is a RECORD layout that has four blocks 122-128 and text-line 130 within main block 120. The length-proportional bar display is in block 132. Highlighting has not been shown and in the Figure, all blocks 122-128 are at highest level. Block 122 shows audio source that may be compact disc, radio, record player, microphone, auxiliary. Second block 124 shows where to record, that may be after last track, side A or (B), begin side A(B), begin current track, after current track, begin selected track, end selected track. In the latter two cases, at the next lower level, cycling may be effected through all tracks on either side A, B. Third block 126 shows overwrite permission that may be until end of side, until begin of next track, or until begin of selected track. In the latter case, at the next lower level the system may cycle along all tracks. The fourth block 128 may show track name. Track may have no name or name as specifiable by the table of contents. The substance of the name could be the composer, the title of item or song, principal performer, or other. Finally, text line 130 shows the time actually available for recording: 45 minutes 0 secs. During the specifying of the items of blocks 124, 126, the time content of this line is updated when necessary. During actual recording the time content of this line is real-time updated, together with actual running of the medium.

Length-proportional bar display 132 again shows the various tracks, together with current position of pick-up element as a dark arrow, and the intended starting point of the recording as a lighter arrow. Display of tracks is now as a single colour, as far as they have actually been recorded. Furthermore, a separate band at the lower edge of side B indicates the region where recording is to take place. If the user wants to know the content of what is to be overwritten, a changeover to the information display of Figure 3 should be made.

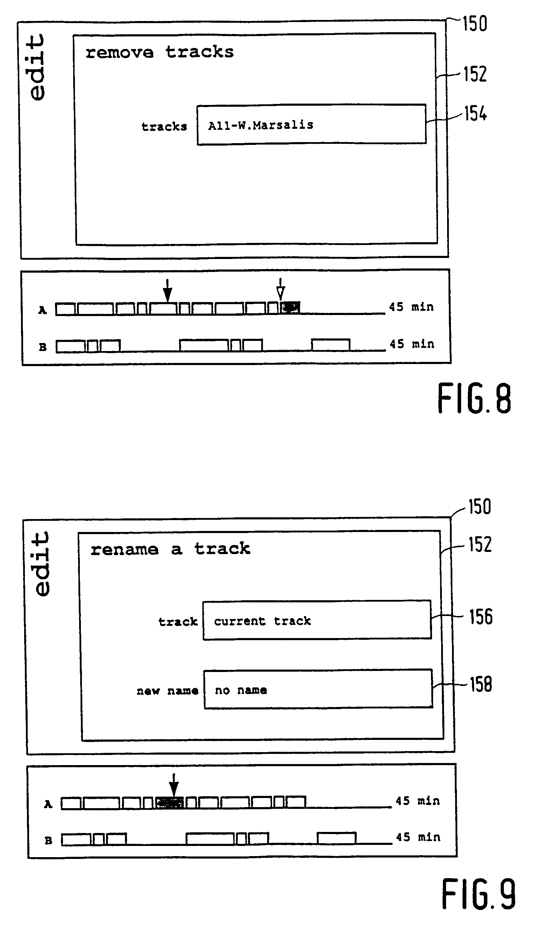

Figures 8-12 show EDIT mode, which is divided into submodes, that can be cycled through rotary button 50. Figure 8 shows the remove-tracks submode. Overall block 150 contains submode blocks 152. On the next lower level block 154 shows the track or tracks that may be removed. Pressing GO button 62 would execute the removing. The selections are, for example, all tracks side A+B, all tracks side A, ditto B, current track, particular selected track. In the latter case default is at first track side A; when the system goes one level deeper, this track is actually shown by number and name. Thereafter, rotary button 50 will successively cycle through all respective tracks. In this case, the target cursor (lighter) in block 160 indicates the beginning of what is to be removed, whereas the part to be removed is shown in a different colour (grey) from the tracks not to be removed; therefore, the grey arrow points at a notional pick-up element position that need not become an actual one.

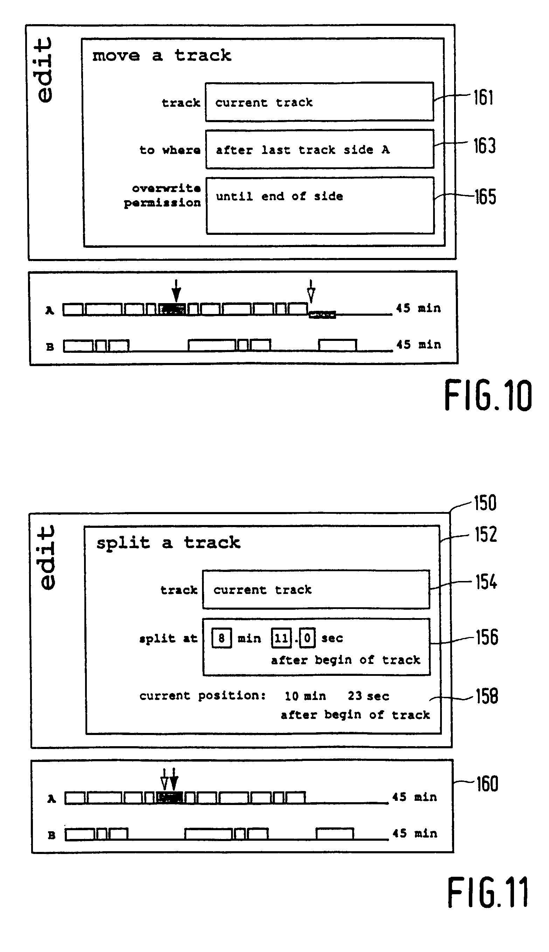

Figure 9 shows the rename a track submode. Selecting submode is by button 50. One level deeper allows to step between blocks 156 and 158 by cursoring. Highlighting block 156 allows to specify a track. Cycling may be through current track/selectable track, so that at next lower level the names are cycled, or the cycling may be at the level shown. Highlighting block 158 allows for the current track. A separate possibility is to compose a name, which must be done at a next lower level. Cursoring is then through character positions in sequence, whereas character selection is by cycling with button 50.

Figure 10 shows the move track submode. This has the origin track (161) shown in the same way as remove track. The destination position (163, 165) is handled as shown in the same way as the record function described earlier.

Figure 11 shows the split a track submode. Track selection (154) is as in rename track, but now, in next block 156 the splitting position is to be specified, either at current position, or in three successive cursor positions cycling through minutes, seconds, tenths of seconds after begin of (current) track (block 156). The changing of the respective time values is done by rotary control element 50. As shown, during the split function, also the current position of the pick-up element is shown by the dark cursor whereas the splitting position is indicated by the lighter cursor arrow.

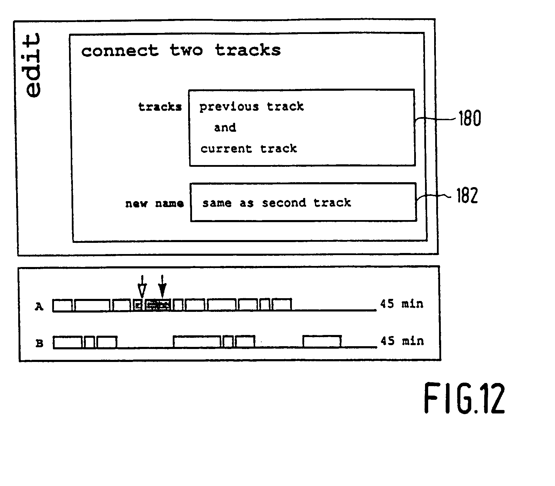

Figure 12 shows the connect two tracks submode. This is selectable (180) on current track and next track, or on previous track and current track. Also, in block 182 the name of the connected tracks can be chosen as same as first track, same as second track, or no name. In the first two cases, on the next lower level cycling through the respective names of the track in question can be effected through actuating rotary control element 50. In the connect function, text display 158 is not used. The current track and position are indicated by the darker cursor. The lighter cursor indicates the beginning of the track that is to be connected to the current track. For the connect operation, there is a maximum allowed spacing between the tracks to be connected. If the spacing is too large, an error message is displayed and the connecting is only effectible if the two tracks are moved towards each other.

Likewise, various other error situations when occurring, are signalled to a user. In certain situations, operating GO-button 62 will elicit a particular illustrating feedback noise or sound.

## Claims

1. A consumer apparatus (Fig. 1) for reading an information carrier (92) having a linear sequence of information items and for reproducing the sequence of the information items, the apparatus comprising a first visual display means (36) for displaying a bar comprising the start positions of the information items and for indicating respective states concerning the reproduction along the sequence of the information item so displayed,
characterised in that
the first visual display means (36) are arranged:
- to display various ones of the information items as a sub-bar each having a particular minimum length but otherwise a length that is proportional to a length of the particular information item, and
- to display a space between particular ones of the displayed information items, the space representing a gap between the particular information items in the linear sequence.

2. A consumer apparatus (Fig. 1) as claimed in Claim 1, wherein said display means (36) allow for displaying discriminatory information between at least a first user functionality state and a second user functionality state on the level of a complete information item.

3. A consumer apparatus (Fig. 1) as claimed in Claim 1 or 2, wherein said display means (36) allow for displaying discriminatory information between at least a first user functionality state and a second user functionality state both within one single such information item.

4. A consumer apparatus (Fig. 1) as claimed in Claim 2 or 3, wherein said display means (36) allow for displaying at least three different user functionality states simultaneously.

5. A consumer apparatus (Fig. 1) as claimed in Claim 1, 2 or 3, wherein said display means (36) allow for perceptually steady displaying discriminatory information regarding said item's user functionality state.

6. A consumer apparatus (Fig. 1) as claimed in any of Claims 1 to 5, wherein an actual pick-up position (39) along said sequence on said carrier controls a change-over between a "past" state and a "future" state displayed by said display means (36).

7. A consumer apparatus (Fig. 1) as claimed in any of Claims 1 to 6, wherein an intended pick-up position along said sequence on said carrier controls a changeover between a "past" state and a "future" state displayed by said display means (Fig. 6).

8. A consumer apparatus (Fig. 1) as claimed in any of Claims 2 to 7, wherein said display means (Fig. 4, 148) allow for discriminatory displaying at a notional and functionality assisting pick-up element's position an associated said information item as differing from neighbouring ones of said information items.

9. A consumer apparatus (Fig. 1) as claimed in Claim 6, 7 or 8, wherein any of said pick-up element positions is cursored by a uniquely identifiable cursor (Fig. 4, 148).

10. A consumer apparatus (Fig. 1) as claimed in any of Claims 1 to 9 and having recording functionality (Fig. 7).

11. A consumer apparatus (Fig. 1) as claimed in Claim 10 wherein said display means (Fig. 7, 132) allow for supplementing said length-proportional display alongside and temporally conforming a second length-proportional display indicating an intended recording functionality.

12. A consumer apparatus (Fig. 1) as claimed in any of Claims 1 to 11 wherein any said display means is monochromic.

13. A consumer apparatus (Fig. 1) as claimed in any of Claims 1 to 12 for operating with a tape carrier.

14. A consumer apparatus (Fig. 1) as claimed in any of Claims 1 to 12 for operating with a disk carrier.

15. A consumer apparatus (Fig. 1) as claimed in any of Claims 1 to 14 and having second display means (120) for in each of a plurality of apparatus modes displaying a plurality of function assisting indications in the way of a form showing messages (122-130) as being cocontrolled with said first display means (132) with respect to respective item functionality states and/or positions along said sequence on said carrier.

## Patentansprüche

1. Gebrauchergerät (Fig. 1) zum Auslesen eines Informationsträgers (92) mit einer linearen Folge von Informationseinheiten und zum Wiedergeben der Folge von Informationseinheiten, wobei dieses Gerät ein erstes Sichtwiedergabemittel (36) aufweist zum Wiedergeben eines Stabes mit den Startpositionen der Informationseinheiten und zum Angeben der betreffenden Zustände in Bezug auf die Wiedergabe längs der auf diese Weise wiedergegebenen Folge der Informationseinheit, dadurch gekennzeichnet, daß das erste Sichtwiedergabemittel (36) für die nachfolgenden Zwecke vorgesehen ist:
- zum Wiedergeben der jeweiligen Informationseinheiten als Hilfsstab mit je einer bestimmten minimalen Länge, aber sonst mit einer Länge, die zu einer Länge der betreffenden Informationseinheit proportional ist, und
- zum Wiedergeben eines Raums zwischen bestimmten Einheiten der wiedergegebenen Informationseinheiten, wobei dieser Raum eine Lücke zwischen den bestimmten Informationseinheiten in der linearen Folge darstellt.

2. Gebrauchergerät (Fig. 1) nach Anspruch 1, wobei die genannten Wiedergabemittel (36) die Möglichkeit bieten, auf diskriminierende Weise Information zwischen wenigstens einem ersten Gebraucherfunktionalitätszustand und einem zweiten Gebraucherfunktionalitätszustand auf dem Pegel einer kompletten Informationseinheit wiederzugeben.

3. Gebrauchergerät (Fig. 1) nach Anspruch 1 oder 2, wobei die genannten Wiedergabemittel (36) die Möglichkeit bieten, auf diskriminierende Weise Information zwischen wenigstens einem ersten Gebraucherfunktionalitätszustand und einem zweiten Gebraucherfunktionalitätszustand, beide innerhalb einer einzigen solchen Informationseinheit wiederzugeben.

4. Gebrauchergerät (Fig. 1) nach Anspruch 2 oder 3, wobei die genannten Wiedergabemittel (36) die Möglichkeit bieten, wenigstens drei verschiedene Gebraucherfunktionalitätszustände gleichzeitig wiederzugeben.

5. Gebrauchergerät (Fig. 1) nach Anspruch 1, 2 oder 3, wobei die genannten Wiedergabemittel (36) die Möglichkeit bieten, auf diskriminierende Weise sichtbar kontinuierlich Information in Bezug auf den genannten Gebraucherfunktionalitätszustand wiederzugeben.

6. Gebrauchergerät (Fig. 1) nach einem der Ansprüche 1 bis 5, wobei eine aktuelle Aufnahemposition (39) längs der genannten Folge auf dem genannten Träger eine Umschaltung zwischen einem "Vergangenheit"-Zustand und einem "Zukunft"-Zustand, wiedergegeben von dem genannten Wiedergabemittel (36) steuert.

7. Gebrauchergerät (Fig. 1) nach einem der Ansprüche 1 bis 6, wobei eine beabsichtigte Aufnahmeposition längs der genannten Folge auf dem genannten Träger eine Umschaltung zwischen einem " Vergangenheit"-Zustand und einem "Zukunft"-Zustand, wiedergegeben von dem genannten Wiedergabemittel (Fig. 6) steuert.

8. Gebrauchergerät (Fig. 1) nach einem der Ansprüche 2 bis 7, wobei die genannten Wiedergabemittel (Fig. 4, 148) die Möglichkeit bieten, auf diskriminierende Weise an einer imaginären und die Funktionalität helfenden Position des Aufnahmeelementes eine Anzeige wiederzugeben, die der genannten Informationseinheit zugeordnet ist, als abweichend von benachbarten Einheiten der genannten Informationseinheiten.

9. Gebrauchergerät (Fig. 1) nach Anspruch 6, 7 oder 8, wobei jede beliebige Position der Positionen des Aufnahmeelementes durch einen einzigartig identifizierbaren Cursor (Fig. 4, 148) angezeigt wird.

10. Gebrauchergerät (Fig. 1) nach Anspruch einem der Ansprüche 1 bis 9 mit Aufzeichnungsinktionalität (Fig. 7).

11. Gebrauchergerät (Fig. 1) nach Anspruch 10, wobei die genannten Wiedergabemittel (Fig. 7, 132) die Möglichkeit bieten die genannte längenproportionale Wiedergabe in der Längsrichtung und zeitlich entsprechend einer zweiten längenproportionalen Wiedrgabe, die eine beabsichtigte Aufzeichnungsfunktionalität bezeichnet, zu ergänzen.

12. Gebrauchergerät (Fig. 1) nach einem der Ansprüche 1 bis 11, wobei alle genannten Wiedergabemittel monochrom sind.

13. Gebrauchergerät (Fig. 1) nach einem der Ansprüche 1 bis 12 zum Zusammenarbeiten mit einem Bandgerät.

14. Gebrauchergerät (Fig. 1) nach einem der Ansprüche 1 bis 12 zum Zusammenarbeiten mit einem Plattenträger.

15. Gebrauchergerät (Fig. 1) nach Anspruch einem der Ansprüche 1 bis 14 mit zweiten Wiedergabemitteln (120) zum in jeder einer Anzahl Gerätmoden eine Anzahl funktionshelfende Anzeigen wiederzugeben, und zwar in der Art und Weise eines Formulrs mit Nachrichten (122 - 130) die mit den genannten ersten Wiedergabemitteln (132) mitgesteuert werden in Bezug auf die betreffenden Funktionalitätszustände der Einheiten und/oder Positionen längs der genannten Folge auf dem genannten Träger.

## Revendications

1. Appareil grand public (Fig. 1) pour lire un support d'information (92) comportant une séquence linéaire d'éléments d'information et pour reproduire la séquence des éléments d'information, l'appareil comprenant des premiers moyens de visualisation (36) pour afficher une barre comprenant les positions de début des éléments d'information et pour indiquer des états respectifs concernant la reproduction le long de la séquence des éléments d'information affichés de cette manière,
caractérisé en ce que
les premiers moyens de visualisation (36) sont agencés :
- pour afficher certains des éléments d'informations particuliers sous la forme d'une sous-barre, chaque élément présentant une longueur minimale particulière mais autrement une longueur qui est proportionnelle à une longueur de l'élément d'information particulier, et
- pour afficher un espace entre des éléments particuliers des éléments d'information affichés, l'espace représentant un écartement entre les éléments d'information particuliers dans la séquence linéaire.

2. Appareil grand public (Fig. 1) suivant la revendication 1, dans lequel lesdits moyens d'affichage (36) permettent d'afficher des informations discriminatoires entre au moins un premier état de fonctionnalité utilisateur et un deuxième état de fonctionnalité utilisateur au niveau d'un élément d'information complet.

3. Appareil grand public (Fig. 1) suivant la revendication 1 ou 2, dans lequel lesdits moyens d'affichage (36) permettent l'affichage d'informations discriminatoires entre au moins un premier état de fonctionnalité utilisateur et un deuxième état de fonctionnalité utilisateur à la fois au sein d'un seul élément d'information de ce type.

4. Appareil grand public (Fig. 1) suivant la revendication 2 ou 3, dans lequel lesdits moyens d'affichage (36) permettent l'affichage simultanément d'au moins trois états de fonctionnalité utilisateur différents.

5. Appareil grand public (Fig. 1) suivant la revendication 1, 2 ou 3, dans lequel lesdits moyens d'affichage (36) permettent l'affichage pratiquement permanent d'informations discriminatoires concernant l'état de fonctionnalité utilisateur dudit élément.

6. Appareil grand public (Fig. 1) suivant l'une quelconque des revendications 1 à 5, dans lequel une position de captage réelle (39) le long de ladite séquence sur ledit support commande une permutation entre un état "passé" et un état "futur" affichés par lesdits moyens d'affichage (36).

7. Appareil grand public (Fig. 1) suivant l'une quelconque des revendications 1 à 6, dans lequel une position de captage prévue le long de ladite séquence sur ledit support commande une permutation entre un état "passé" et un état "futur" affichés par lesdits moyens d'affichage (Fig. 6).

8. Appareil grand public (Fig. 1) suivant l'une quelconque des revendications 2 à 7, dans lequel lesdits moyens d'affichage (Fig. 4, 148) permettent l'affichage discriminatoire à une position imaginaire et d'assistance fonctionnelle de l'élément capteur, un dit élément d'information associé étant différent des éléments voisins desdits éléments d'information.

9. Appareil grand public (Fig. 1) suivant l'une quelconque des revendications 6, 7 ou 8, dans lequel l'une quelconque desdites positions de l'élément capteur est signalée par un curseur à identité unique (Fig. 4, 148).

10. Appareil grand public (Fig. 1) suivant l'une quelconque des revendications 1 à 9 et ayant une fonctionnalité d'enregistrement (Fig. 7).

11. Appareil grand public (Fig. 1) suivant la revendication 10, dans lequel lesdits moyens d'affichage (Fig. 7, 132) permettent de compléter ledit affichage proportionnel à la longueur parallèlement et de se conformer de manière temporelle à un deuxième affichage proportionnel à la longueur indiquant une fonctionnalité d'enregistrement escomptée.

12. Appareil grand public (Fig. 1) suivant l'une quelconque des revendications 1 à 11, dans lequel tous lesdits moyens d'affichage sont monochromes.

13. Appareil grand public (Fig. 1) suivant l'une quelconque des revendications 1 à 12 destiné à fonctionner avec un support en forme de bande.

14. Appareil grand public (Fig. 1) suivant l'une quelconque des revendications 1 à 12 pour fonctionner avec un support en forme de disque.

15. Appareil grand public (Fig. 1) suivant l'une quelconque des revendications 1 à 14, et comportant des deuxièmes moyens d'affichage (120) pour, dans chacun d'une pluralité de modes de l'appareil, afficher une pluralité d'indications d'assistance fonctionnelle sous une forme montrant des messages (122-130) comme étant conjointement commandées avec lesdits premiers moyens d'affichage (132) par rapport à des états de fonctionnalité et/ou de position de l'élément respectifs le long de ladite séquence sur ledit support.
